# EUROPEAN PATENT APPLICATION

(11) **EP 1 541 033 A1**
(43) Date of publication of application: **15.06.2005**
(21) Application number: 04013691.3
(22) Date of filing: 10.06.2004
(51) Int. Cl.: A23G 1/00, A23L 1/187, A23C 9/15, A23G 9/02

(54) **Chocolate based filling, coating and shaping composition for pastry products and production method thereof**

(30) Priority: 09.12.2003 TR 200302110
(71) Applicant: Akcakanat, Deniz Göktürk, Caddebostan, Istanbul (TR)
(72) Inventor: Akcakanat, Deniz Göktürk, Caddebostan, Istanbul (TR)
(74) Representative: Kaya, Erdem

(57) **Abstract**

A filling, shaping, and coating composition for pastry making -in a general sense- with the following formula, which is supplied in a ready-to-use form, is standardized, hygienic, rich in nutrition content, which maintains its natural properties, which eliminates all risks possibly to arise in foodstuff, which has a long durability time, which provides an easy use and time saving for the pastry-making sector, which has an indecomposable fat content, which does not cause a so-prepared pastry product to melt, collapse, which is freezable, is used for pastry products for filling, coating, and decorating purposes with a low-effluent foamy consistency, which is designed to be produced in closed packages, which is chocolate and milk based, and prepared for industrial and household applications.
Formula:
Milk: 12-65% (w/w)
Vegetable margarine 9-46% (w/w)
Egg yolk: 2,5-27% (w/w)
Chocolate: 5-62% (w/w)

## Description

### TECHNICAL FIELD

The present invention relates to freezable and completely ready-to-use chocolate-based pastry coating, filling, and/or shaping compositions, which occupy a substantial place in the food sector, and to a production method thereof.

Especially, the present invention relates to a ready-for-use filling, coating, and shaping composition, which comprises properly concentrated amounts of chocolate and fresh milk, has a high nutrition content, is freezable, has a thin and smooth consistency, a indecomposable fat content, which does not lead to a so-prepared pastry to melt and collapse, which has a long duration time in a so-prepared pastry and a long shelf life, is aimed for both industrial uses in food plants such as milk product factories and patisseries and for domestic uses in houses or special places with individual food preparations, and to a production method of such compositions.

### BACKGROUND OF INVENTION

Cream fillings for pastry products are being used for various foodstuffs nowadays. Such cream fillings, as the one known to be the most used component in pastry field, is the name given for the cream type, which is used in the professional pastry sector and for pastry and pastry-like products of the household. A pie (pastry) is a kind of food with sponge cakes in various types and sizes filled in between with whipped cream and/or custard and with various inner materials (fruits, chocolate, etc.) for birthdays, engagement, wedding parties, and also for daily consumption.

Pastry creams for pastries or pies, which have been used since from the past, are not a special kind of cream, but of a type for general-purpose uses.

Creams/whipped creams from the relevant current art are produced with mass production (fabricated production) and supplied in powder or liquid forms. Powder formed materials among such are thickened by adding water and milk, while liquid formed materials are used with the addition of sugar or custard in pastry making.

Patisserie (has a milk pudding like taste, known also as custard), as another type of pastry cream or milk pudding in the art is applied in pies and other pastry products alone or together with cream/whipped cream.

Those aforesaid varieties used for pastry creams as well, are employed all kinds of dessert, meal, sauce, pastry products, beside industrial and household uses. The subject composition, however, is not a kind of cream, but is a filling, shaping, and coating composition for pies/tarts/cakes and pastry products. Compositions of known creams towards the relevant industry (creams/whipped creams) are based on fat and have the significant drawback of lacking a long durability, which corresponds to two days, after they are opened and applied.

Component qualities of creams prepared for patisseries, custards, etc. bear risks to lead to severe diseases, even deaths, when eggs and milk are not used in proper conditions.

Also all type of oils and butters, unclean waters, sugar and sweeteners included in preparing such kind of creams, on the other hand, bear also similar risks. Also since such preparations are performed manually, the hygiene of environment and equipment lean only on the personal initiatives of the relevant persons and producers. As obvious, this kind of food production imposes a substantial danger, as it is open to mishandling and far from standardization.

The lack of a standard in producing such pastry creams employed in the production phase of pastry products or pies, as stated hereinabove, difficulties encountered in their use and storage contribute to a technical problem that requires a solution and an improvement in the relevant art.

### BRIEF DESCRIPTION OF INVENTION

The present invention provides a pastry filling, coating, and shaping composition for industrial and household uses, which contains high amounts of chocolate and fresh milk, has a high nutrition content, is stomach-friendly, has a thin and smooth thickness, and an indecomposable fat content. The present invention aims to produce a method to obtain a novel ready-to-use filling, shaping, and coating material for pastry products, which does not cause a so-prepared pastry to melt and collapse, is freezable and does not loose its taste once solved, maintains its fresh appearance, has standard facts with unchanged thickness and ingredient features, and has a long duration period and shelf life after it is applied to a pie or another pastry product.

The reason why an adequate amount of chocolate is used in the subject composition is that chocolate is a good binder material in making a ready-to-consume foodstuff. Since the melting point of chocolate is around 30 and 50°C, it carries the most important function of the subject composition by keeping a so-prepared pastry from melting and collapsing.

Another objective of the present invention is to obtain a product, which is unique and overcomes all aforesaid drawbacks in the relevant art, as shall be seen with the details disclosed hereunder.

Another objective of the present invention is to produce a pastry filling, shaping, and coating material, which does not necessitate the concurrent use of materials such as creams, whipped creams, and patisseries.

A further objective in standardizing the production of the subject composition is to prevent the arbitrariness of uncontrolled nutrition facts, personnel skills and initiatives, all contributing a threat for health. This kind of standard shall avoid all restrictions arising from geography, human and infrastructure factors and the health risks created with the lacks of hygiene inspections.

Yet another objective of the present invention is to provide a product, which, upon opening its package, can be used directly without necessitating any further material addition.

Still another objective of the present invention is to provide a product, which is produced to be used readily by the consumers. This product has other advantages of providing energy and timesaving during household and industrial applications, beside the hygiene criterion and use readiness.

Products in the form of ready-to-use pastry creams or filling materials not necessitating additives are available neither locally nor internationally in the related industrial market. Such composition is the first in comprising a distinct content prepared in a ready-to-use form in the pastry-making sector, as different from the current creams, which are known as general-purpose creams and whipped creams and produced to be used generally in meals.

Also since the subject composition or product has a market name (trademark, type), it shall become possible for a consumer to examine the content and freshness of a pastry product in a showcase, which actually was not possible so far. The present invention also provides solutions for current problems like melting, dissolving, collapsing, and water or fat decomposition encountered in whipped creams containing milk fat.

As can be easily understood from the aforesaid explanations, the composition provided with the present invention obviously
- provides a healthy and easy use possibility;
- eliminates the necessity for separately maintaining each material to be used in making cream; and
- gives opportunity from saving energy and time in household uses and industrial manufactures to lead to lower costs.

An exemplary composition of the present invention requires only to be whipped before involved in a preparation process. Thanks to this, no risks are encountered, as it is the case in the current creams, which have contents on a nonstandard basis.

Pastry products prepared with the subject composition can be frozen. At the same time, when they are unfrosted, they are not changed regarding freshness, consistency, and content. Since milk is used naturally in the composition's content, in place of milk powder or cream powder, such contained milk, thus the product maintains the scent, taste of milk and the nutrition facts.

Against the arbitrary production dependent on personal initiatives, a recipe shall be the guarantee of a healthy nutrition, comprising increased nutrition contents in the production of a standardized pastry filling material. The subject product obtained as a result of a series of tests has given excellent results regarding thickness and easy use.

An exemplary composition of the present invention with a foamy consistency can be used both in filling the interior of a pastry product and external coating, and for decorating and shaping.

The subject composition contains high amounts of milk, as known. Thanks to its buffer effect, such contained milk avoids to a certain extent the change in pH (acid/base balance). As a result, milk has the characteristic of absorbing a certain amount of acids and bases, without changing its own reaction. Thanks to this feature, milk is used in certain circumstances such as alkali or acid intoxication. Therefore the subject composition containing milk and milk derivatives, with a long life and easy-use potential, can be used for different purposes as a useful foodstuff.

In this manner, no extra materials are required in a pastry preparation phase, except cakes (sponge cake) and inner materials such as fruits, brittles, dried fruits/nuts, etc. The subject composition can also be flavored with coffees, liquors, fruit and plant aromas.

### DEFINITIONS

**Cream/Whipped cream:** A composition comprising a mixture of cow milk cream (with a 35% milk fat content generally), thickener, and sugar, manufactured with mass production either in powder or liquid form. Cream can be used uncooked in all kind of meals and sauce products. Regarding pastry products, water/milk is added to powder compositions, sugar is added to liquid compositions or such compositions are mixed with patisserie (custard).

**Patisserie/Custard:** A pastry cream type made of milk and egg with a yogurt thickness by combining and cooking materials such as flour, starch, sugar, milk, water, egg, butter, etc. Such cooking creams known as creams (cream patisserie, custard) or pastry cream are generally used as filling materials in all pastry products.

**Chocolate couverture:** A chocolate type containing at least 40% cacao, used for chocolate cakes/pastries in professional kitchens.

**UHT:** A technology abbreviated from the English words Ultra High Temperature, where milk is heated up to temperatures of 135-150°C in 4-6 seconds and cooled down at the same time, then filled into aseptic packages. As a result of such UHT process, milk does not lose its natural properties and nutrition contents, as differing from other sterilization processes. UHT technology and aseptic packaging is a significant advantage in healthily providing milk for consumption. The benefit in UHT technology based milk is that the nutrition content is maintained for several months without using any additives. UHT process is performed preferably by heating up milk to 132°C in at least 1 second. The subject composition can also be subjected to other pasteurization methods, such as HTST with a pH lower than 7 (acid high heat-short time pasteurization) or double HTST with a pH value of 7 or higher.

### DETAILED DESCRIPTION OF A PREFERRED COMPOSITION UNDER THE PRESENT INVENTION

In order to realize above mentioned objectives, the subject product is a pastry filling, shaping and coating material preferably prepared with chocolate couverture or any other chocolate types such as bitter, white, milky and comprises egg, vegetable margarine, and high amounts of milk and chocolate.

A method to prepare such pastry filling, shaping, and coating composition according to the present invention comprises the following steps:
- vegetable margarine is melted in adequate amounts within milk boiled in a predetermined temperature interval and contains maximum 4.5% fat by weight;
- a predetermined amount of egg is added at this stage;
- chocolate, preferably chocolate couverture in an adequate amount is melted in such formed composition;
- such ingredients entirely mixed within milk are whipped by means of a mixer with shredding capability for 15-20 minutes to homogenize the present composition;
- cooling down such homogenized composition to 0 to +6°C, and preferably to +4, +5°C for 10-20 hours;
- optionally, emulgator or other similar chemical additives are involved to enhance the durability of the subject composition and/or the same is pasteurized (UHT); and
- such composition is packaged.

Said steps make the subject composition freezable. When such frozen composition is unfrosted, no changes have been observed in its taste, appearance, consistency, freshness, and composition content.

In an exemplary preferred composition of the present invention, such ready-to-use pastry shaping, coating, and filling composition comprises 12-65%, preferably 30-40%, and most preferably 35,71% milk; 9-46%, preferably 15-25%, and most preferably 21,42% vegetable margarine; 2,5-27%, preferably 5-15%, and most preferably 7,14% egg; 5-62%, preferably 30-45%, most preferably %35,71 chocolate by the total weight of composition.

Milk used in the subject composition is boiled by subjecting to temperatures of 80-100°C preferably.

In another preferred composition of the present invention, whilst such milk ingredient boiled in the mixture can be a fatty milk containing 0,1-4,5% fat by weight to maintain a fresh milk scent, taste, and nutrition content, it can also be one of or a mixture of several components selected from the following group: whole milk, low fat milk, fatless milk, skimmed milk, soybean milk, milk powder, fatless milk powder, diluted milk, water.

In a further preferred composition of the present invention, whilst hydrogenised vegetable margarine is preferably used as a component with binding characteristics, it can also be one of or a mixture of several components selected from the following group: butter, vegetable (liquid) oils, milk cream, diet oil varieties. Since the melting point of hydrogenised margarine is 30-40°C, the composition can be readily frozen and relatively hardly decomposed once it is unfrozen.

Yet in another preferred composition of the present invention, whilst egg yolk is preferably used as a component with binding characteristics, it can also be one of or a mixture of several components selected from the following group: full egg, egg yolk, egg white, pasteurized egg, emulgator. Such egg yolk to be used in the subject composition, gathers and binds the compositional components after they are shredded by means of a mixer. This allows the composition to freeze, and avoids its dissolving and melting. An adequate amount of emulgator with similar characteristics can also be used in place of egg yolk, to further lengthen the shelf life of the subject composition. Also other binders such as flour, starch, sugar, etc, and other thickener additives and powders can also be employed with the same purposes.

Still in another preferred composition of the present invention, whilst chocolate couverture is preferably used as a component with binding characteristics, it can also be one of or a mixture of several components selected from the following group in liquid or powder forms: bitter chocolate, white chocolate, milky chocolate, fruity chocolate, madlen, praline, ganache, chocolate couverture, confissery, drop chocolate, cacao, diabetic chocolate. The use of chocolate in the subject composition enhances the taste quality, the freezing property, makes it decompose relatively harder, and is the most significant component in making the composition melt in mouth, smooth, and foamy. Chocolate with a melting point of 30-50°C is an effective component in avoiding a so-prepared pastry product from melting and collapsing. The present invention further provides a ready-to-use industrial pastry cream, prepared from dark, cacao, and bitter chocolates, in addition said white pastry cream.

Optionally thickeners such as flour, starch, cheese, yogurt, powders thereof, sugars, and flavorings agents such as coffee, liquors, fruits, and plant aromas, and the powders thereof can be added in various amounts to produce varieties of the subject composition.

Such components to be entirely mixed within milk as forming the content of the subject composition are whipped preferably for 15-20 minutes with a mixer (i.e. shredding processor). Such composition homogenized this way is subjected to a cooling process of 0-6°C and preferably to 4-5°C for around 10-20 hours. This cooling process is performed preferably for 12 hours. Lengthening this cooling period can give relatively better results, though, depending on the type of usages after manufacture. Use of an emulgator during the manufacture stage can lengthen the shelf life. Also chemical additives can be added and/or the resulting mixture homogenized and thus packaged in order to lengthen the durability of the subject composition.

The shelf life of the subject composition, as formed by mixing aforesaid components as described above, can be lengthened by subjecting it to sterilization at 100-130°C for 10-20 minutes and/or pasteurizing by means of the UHT method at 120-150°C for 2-30 seconds, and by packaging thereafter; these operation shall also provide a standardization for the overall processes and the resulting product. It is known from prior art that the current pastry creams have a durability of 2 days, after being applied to a pastry product. This period has been observed for the subject composition as 5-8 days, though no chemical additives are contained therein. Also once the subject composition is pasteurized and so-packaged, it shall become to lengthen the shelf life to 4 months or longer periods.

In an exemplary composition of the present invention, full hygienic conditions are settled, and the subject composition is designed to be produced within package in facilities with hygiene and quality control inspections performed. One of the most significant features of the present invention is that it is packaged to be supplied for end use. The standardized subject composition, no other materials such as cream, whipped cream, milk, milk powder, powder cream are added and it is supplied in the form of liquid, low-fluid, foamy forms within packages for end use. The present invention shall allow the ready-to-use pastry filling, shaping, and coating composition to be directly applied in all industry sectors especially including pastry making and bakery. This ready-to-use composition shall also be used in household products.

The materials as given below with their component percentages are entirely whipped within milk with a shredding mixer for 15-20 minutes and thereby homogenized. This homogenized composition is then cooled down to 0-6°C and preferably to 4-5°C for around 10-20 hours. But still in other embodiments, the durability period of 5-8 days when the subject composition is maintained between temperatures of 0 to 6°C can be lengthened by addition of chemical additives and/or pasteurization, and packaging. A mixer (shredding processor) is especially used for this operation.

The cooled composition is whipped until it is raised to a foamy form during use. It is raised within a short time interval such as 3-5 minutes after its package is opened and is whipped with a electrical mixer (preferably Kitchen Aid, Kenwood-Chef, etc.) and it made ready for use.

| **EXAMPLE 1** | | |
|---|---|---|
| **Composition Components** | **Features** | **Total Amounts Percentage (%)** |
| Milk (boiled at 80-100°C) | (containing 0,1-4,5% milk by weight) | 12-65% |
| Butter/margarine (as a binding agent) | (vegetable margarine preferably) | 9-46% |
| Egg (as a binding agent) | (egg yolk preferably) | 2,5-27% |
| Chocolate | (chocolate couverture preferably) | 5-62% |
| Additive | (emulgator) | 0% minimum |

| **EXAMPLE 2** | | |
|---|---|---|
| **Composition Components** | **Features** | **Total Amounts Percentage (%)** |
| Milk (boiled at 80-100°C) | (containing 0,1-4,5% milk by weight) | 30-40% |
| Butter/margarine (as a binding agent) | (vegetable margarine preferably) | 15-25% |
| Egg (as a binding agent) | (egg yolk preferably) | 5-15% |
| Chocolate | (chocolate couverture preferably) | 30-45% |
| Additive | (emulgator) | 0% minimum |

| **EXAMPLE 3** | | |
|---|---|---|
| **Composition Components** | **Features** | **Total Amounts Percentage (%)** |
| Milk (boiled at 80-100°C) | (containing 0,1-4,5% milk by weight) | 35,71% |
| Butter/margarine (as a binding agent) | (vegetable margarine preferably) | 21,42% |
| Egg (as a binding agent) | (egg yolk preferably) | 7,14% |
| Chocolate | (chocolate couverture preferably) | 35,71% |
| Additive | (emulgator) | 0% minimum |

### RESEARCH OF RESULTS OBTAINED WITH THE PROCESS OF PRESENT INVENTION

It is obvious that the present invention as detailed with a nonrestrictive example hereinabove can be subjected to modifications, amendments and simplifications by a person skilled in the art.

Therefore the present invention shall be assessed not with the foregoing disclosures only, but the following annexed claims.

## Claims

1. A composition made with one or several purposes of shaping, filling, and coating pastry products and the derivatives thereof; **characterized in that** said composition is chocolate based, ready-to-use freezable composition comprising 12-65% adequately boiled milk, 9-46% vegetable margarine, 2,5-27% egg, 5-62% chocolate by the total weight of the composition..

2. A chocolate based, freezable, ready-to-use composition according to Claim 1, **characterized in that** said adequately boiled milk corresponds to one or a mixture of whole milk, low fat milk, fatless milk, skimmed milk, soybean milk, milk powder, fatless milk powder, diluted milk, water in varying proportions.

3. A chocolate based, freezable, ready-to-use composition according to Claim 1, **characterized in that** said milk is high- or low-fat milk boiled at temperatures of 80-100°C.

4. A chocolate based, freezable, ready-to-use composition according to claims 1, 2, and 3, **characterized in that** said milk contains 0,1-4,5% fat by weight.

5. A chocolate based, freezable, ready-to-use composition according to Claim 1, **characterized in that** said margarine corresponds to one or a mixture of hydrogenised vegetable margarine, butter, vegetable oils, milk creams, diet oils in varying proportions.

6. A chocolate based, freezable, ready-to-use composition according to Claim 5, **characterized in that** said margarine is hydrogenised vegetable margarine with a melting point of 30-40°C.

7. A chocolate based, freezable, ready-to-use composition according to Claim 1, **characterized in that** said egg corresponds to one or a mixture of whole egg, egg yolk, egg white, pasteurized egg in varying proportions.

8. A chocolate based, freezable, ready-to-use composition according to Claim 1, **characterized in that** said chocolate corresponds to one or a mixture of bitter chocolate, white chocolate, milky chocolate, fruity chocolate, madlen, praline, ganache, chocolate couverture, confissery, drop chocolate, cacao, diabetic chocolate in liquid and powder forms and in varying amounts.

9. A chocolate based, freezable, ready-to-use composition according to Claim 1, **characterized in that** said composition can be aromatized with coffee, liquors, vanillas, fruit and plant flavors, cheese, fatless cheese, diet cheese, yogurt, condensed yogurt, diet yogurt, and the powder forms thereof.

10. A chocolate based, freezable, ready-to-use composition according to Claim 1, **characterized in that** said composition also contains in varying amounts one or a mixture of the components selected from group of flour, starch, cheese, cheese powder, yogurt, yogurt powder, sugar, thickeners or powder materials.

11. A composition made with one or several purposes of shaping, filling, and coating pastry products, **characterized in that** said composition is a chocolate based, ready-to-use freezable composition comprising 30-40% milk, 15-25% vegetable margarine, 5-15% egg, 30-45% chocolate by the total weight of the composition.

12. A chocolate based, freezable, ready-to-use composition according to Claim 11, **characterized in that** said composition contains 35,71% milk, 21,42% hydrogenised vegetable margarine, 7,14% egg, 35,71% chocolate by the total weight of the composition.

13. A chocolate based, freezable, ready-to-use composition according to claims 1 and 11, **characterized in that** said composition is supplied in a liquid-fluid form within package to be used in relatively hot, cold, or frozen forms.

14. A chocolate based, freezable, ready-to-use composition according to claims 1 and 11, **characterized in that** said composition is a pastry interior filling material which is prepared by merely whipping the liquid-fluid composition after poured out from its package.

15. A chocolate based, freezable, ready-to-use composition according to claims 1 and 11, **characterized in that** said composition is a pastry coating material which is prepared by merely whipping said liquid-fluid composition after poured out from its package.

16. A chocolate based, freezable, ready-to-use composition according to claims 1 and 11, **characterized in that** said composition is a pastry shaping material which is prepared by merely whipping said liquid-fluid composition after poured out from its package.

17. A method for producing a chocolate based, freezable, ready-to-use composition to be used in pastry products and the derivatives thereof with filling, shaping, and coating purposes, such method comprising the following steps:
- milk boiled at temperatures of 80 to 100°C is added into said composition by 12-65% by weight (of the total composition);
- hydrogenised vegetable margarine and egg are added as binding agents into said composition by 9-46% and 2,5-27% by weight of the total composition, respectively;
- chocolate, preferably chocolate couverture is added into and melted in said composition by 5-62% by weight of the total composition;
- said components added into composition are mixed for 15-20 minutes by completely shredding such components;
- such homogenized composition is cooled down to 0-6°C and preferably to 4-5°C for 10-20 hours; and
- for pasteurization purpose, said composition is sterilized preferably at 100-130°C for 10-20 minutes and/or is imposed to UHT process at 120-150°C for 1-5 seconds and then packaged.

18. A method for producing a chocolate based, freezable, ready-to-use composition according to Claim 17, further comprising the step of adding an emulgator into said composition.

19. A method for producing a chocolate based, freezable, ready-to-use composition according to Claim 17, further comprising the step of adding chemical additives to lengthen the durability period thereof.

20. A method for producing a chocolate based, freezable, ready-to-use composition according to Claim 17, wherein an electrical mixer with shredding capability is used for said mixing step.

21. A method for producing a chocolate based, freezable, ready-to-use composition according to Claim 17, wherein said boiled milk corresponds to one or a mixture of whole milk, low fat milk, fatless milk, skimmed milk, soybean milk, milk powder, fatless milk powder, diluted milk, water in varying proportions.

22. A method for producing a chocolate based, freezable, ready-to-use composition according to Claim 17, wherein said milk is high- or low-fat milk boiled at temperatures of 80-100°C.

23. A method for producing a chocolate based, freezable, ready-to-use composition according to Claim 17, wherein said milk contains 0,1-4,5% fat by weight.

24. A method for producing a chocolate based, freezable, ready-to-use composition according to Claim 17, wherein said margarine corresponds to one or a mixture of hydrogenised vegetable margarine, butter, vegetable oils, milk creams, diet oils in varying proportions.

25. A method for producing a chocolate based, freezable, ready-to-use composition according to Claim 17, wherein said margarine is hydrogenised vegetable margarine with a melting point of 30-40°C.

26. A method for producing a chocolate based, freezable, ready-to-use composition according to Claim 17, wherein said egg corresponds to one or a mixture of whole egg, egg yolk, egg white, pasteurized egg in varying proportions.

27. A method for producing a chocolate based, freezable, ready-to-use composition according to Claim 17, wherein said chocolate corresponds to one or a mixture of bitter chocolate, white chocolate, milky chocolate, fruity chocolate, madlen, praline, ganache, chocolate couverture, confissery, drop chocolate, cacao, diabetic chocolate in liquid and powder forms and in varying amounts.

28. A method for producing a chocolate based, freezable, ready-to-use composition according to Claim 17, wherein said composition is cooled down to 0-6°C and preferably to 4-5°C for 12-15 hours.

29. A method for producing a chocolate based, freezable, ready-to-use composition according to Claim 17, wherein said composition can be aromatized with coffee, liquors, vanillas, fruit and plant flavors.

30. A method for producing a chocolate based, freezable, ready-to-use composition according to Claim 17, wherein said composition also contains in varying amounts one or a mixture of the components selected from the group of flour, starch, cheese, fatless cheese, diet cheese, cheese powder, yogurt, fatless yogurt, diet yogurt, condensed yogurt, yogurt powder, sugar, thickeners or powder materials.

31. A method for producing a chocolate based, freezable, ready-to-use composition according to Claim 17, wherein said composition is supplied in a liquid-fluid form within package to be used in relatively hot, cold, or frozen forms.

32. A method for producing a chocolate based, freezable, ready-to-use composition according to Claim 17, wherein said composition is a pastry interior filling material which is prepared by merely whipping the liquid-fluid composition after poured out from its package.

33. A method for producing a chocolate based, freezable, ready-to-use composition according to Claim 17, wherein said composition is a pastry coating and shaping material which is prepared by merely whipping the liquid-fluid composition after poured out from its package.

34. A use of a chocolate based, freezable, ready-to-use composition according to claims 1 and 11, applicable generally for pastry making and bakery sectors/industry as a ready-to-use filling, shaping, and coating composition.

35. A use of a chocolate based, freezable, ready-to-use composition according to claims 1 and 11, applicable for household/domestic purposes as a ready-to-use filling, shaping, and coating pastry composition.

36. A chocolate based, freezable, ready-to-use composition made with one or several purposes of shaping, filling, and coating pastry products and the derivatives thereof, **characterized in that** said composition is a ready-to-use composition comprising 12-65% adequately boiled milk, 9-46% vegetable margarine, 2,5-27% egg, 5-62% chocolate by the total weight of the composition.
